# EUROPÄISCHE PATENTSCHRIFT

(11) **EP 4 169 680 B1**
(45) Veröffentlichungstag und Bekanntmachung des Hinweises auf die Patenterteilung: **12.06.2024**
(21) Anmeldenummer: 22200750.2
(22) Anmeldetag: 11.10.2022
(51) Int. Cl.: B25J 19/00

(54) **VORRICHTUNG ZUR FÜHRUNG VON LEITUNGEN**
DEVICE FOR GUIDING CONDUITS
DISPOSITIF DE GUIDAGE DE CONDUITES

(30) Priorität: 21.10.2021 DE 102021127283
(43) Veröffentlichungstag der Anmeldung: 26.04.2023
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- EP-B1- 1 284 177
- EP-B1- 2 913 162

## Beschreibung

Die Erfindung betrifft eine Vorrichtung zur Führung von Leitungen an einem Industrieroboter gemäß Oberbegriff des Anspruchs 1.

Vorrichtungen zur Führung von Leitungen an einem Industrieroboter sind in unterschiedlicher Ausgestaltung seit langem bekannt, beispielsweise aus der EP 1 179 397 A1. Sie dienen der Führung von Leitungen, beispielsweise in Form von Leitungspaketen, an einem Industrieroboter, welche der Versorgung eines am Industrieroboter montierten Werkzeugs mit Energie oder anderen Medien dienen. Dabei besteht die Notwendigkeit, die Leitungen so zu führen, dass sie die Bewegungen der Roboterachsen nicht behindern und auch nicht durch die Bewegungen der Roboterachsen beschädigt werden. Dabei ist ein Schwenkarm vorgesehen, der an einer Roboterachse montiert wird und dann um eine roboterachsenfeste Schwenkachse verschwenkbar ist. Der Schwenkarm trägt an einem freien Ende einen Halter, der die Leitungen fixiert oder begrenzt längsverschieblich festhält. Um zu gewährleisten, dass der Schwenkarm nach einer Bewegung des Roboters und Rückkehr des Roboters in eine Ausgangsstellung wieder in eine definierte Ruheposition zurück verschwenkt wird, sind eine oder mehrere Rückstellfedern vorgesehen, die den Schwenkarm mit ihrer Rückstellkraft in die Ruheposition zurückdrängen. Dabei besteht jedoch das Problem, dass die Rückstellfedern der vorbekannten Vorrichtungen große Oberflächen aufweisen, an denen sich Verunreinigungen anlagern können, und die schwer zu reinigen sind. Dies ist insbesondere für Anwendungen in der Lebensmittel- und Arzneimittelherstellung und -bearbeitung nachteilig.

Aus der EP 1 284 177 B1 ist eine Vorrichtung der eingangs genannten Art bekannt, deren Rückstellfeder eine tordierende Schraubenfeder ist.

Es ist daher Aufgabe der Erfindung, eine Vorrichtung der eingangs genannten Art derart weiterzubilden, dass sie einfacher zu reinigen ist.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Drahtwindungen der mindestens einen Rückstellfeder im Abstand zueinander zu halten, so dass diese nicht aneinander anliegen, sondern Zwischenräume vorhanden sind, die ein Reinigen des Federdrahts ermöglichen. Wenn die Drahtwindungen in der Ruheposition des Schwenkarms nicht aneinander anliegen, so ist zumindest dann, wenn sich der Schwenkarm in der Ruheposition befindet, eine Reinigung des Federdrahts über dessen gesamten Umfang möglich. Dabei ist es möglich, dass lediglich eine Rückstellfeder den Schwenkarm mit einer Rückstellkraft beaufschlagt, oder aber dass zwei oder mehr parallel zueinander angeordnete Rückstellfedern vorgesehen sind. Diese sind dann zweckmäßig baugleich. Die insgesamt von den Rückstellfedern aufgebrachte Rückstellkraft ist umso großer, je mehr Rückstellfedern zum Einsatz kommen, ohne dass diese groß gebaut werden müssen.

Um die Windungen der mindestens einen Rückstellfeder in der Ruheposition des Schwenkarms auf Abstand zu halten, ist es erfindungsgemäß vorgesehen, dass der Schwenkarm in der Ruheposition an einem Anschlag anliegt, der ein Verschwenken des Schwenkarms in einer der ersten Schwenkrichtung entgegengesetzten zweiten Schwenkrichtung verhindert. Durch diese Maßnahme wird stets ein Mindestabstand der Drahtwindungen eingehalten.

Um eine hinreichend gute Reinigung der mindestens einen Rückstellfeder zu ermöglichen, sind ihre Windungen in einem gegenseitigen Abstand von mindestens 3 mm und vorzugsweise von mindestens 4 mm angeordnet. Dieser Abstand zuzüglich der Dicke des Federdrahts kann auch als Ganghöhe der Schraubenfeder bezeichnet werden.

Der Halter ist zweckmäßig um eine Drehachse drehbar am Schwenkarm angeordnet, um ein zu starkes Biegen der Leitungen bei entsprechender Bewegung des Roboters zu vermeiden. Dabei wird bevorzugt, dass der Halter lösbar und um die Drehachse drehbar an einem ersten Befestigungselement angeordnet ist, welches am Schwenkarm fixiert ist. Durch diese Maßnahme kann der Halter ausgetauscht werden, einerseits bei Verschleiß und andererseits, um ihn durch einen Halter anderer Größe zu ersetzen.

Vorteilhaft erstreckt sich die Schwenkachse zwischen zwei an der Roboterachse fixierten zweiten Befestigungselementen. Ein die Schwenkachse definierendes, bezüglich der Roboterachse drehbares Bauelement ist dann an seinen beiden Enden in jeweils einem der zweiten Befestigungselemente gelagert, so dass es stabil an der Roboterachse befestigt ist. Zweckmäßig sind das erste Befestigungselement und die zweiten Befestigungselemente baugleich, so dass weniger unterschiedliche Bauteile vorgehalten werden müssen.

Vorteilhaft ist ein Gegenlager zur Montage an der Roboterachse vorgesehen, wobei jede Rückstellfeder mit einem ersten Ende am Schwenkarm und mit einem zweiten Ende am Gegenlager befestigt ist. Dabei wird bevorzugt, dass der Schwenkarm und das Gegenlager jeweils mit Kerben versehen sind, in die jeweils ein Drahtabschnitt der Rückstellfeder oder einer der Rückstellfedern eingreift, so dass diese nicht in Längsrichtung des Schwenkarms bzw. des Gegenlagers verrutschen kann bzw. können. Die Kerben laufen zweckmäßig rings um das Gegenlager bzw. den Schwenkarm um.

Die erfindungsgemäße Vorrichtung kann zudem ein Montageelement, beispielsweise ein Blech, zur Montage an der Roboterachse aufweisen, an dem der Schwenkarm um die Schwenkachse verschwenkbar angeordnet ist. Am Montageelement kann zudem der Anschlag und/oder das Gegenlager angeordnet sein. Die gesamte Vorrichtung kann dann vorkonfektioniert werden und durch Montage des Montageelements an der Roboterachse montiert werden.

Im Folgenden wird die Erfindung anhand eines in der Zeichnung schematisch dargestellten Ausführungsbeispiels näher erläutert. Es zeigen
- Fig. 1: eine Teilansicht eines sechsachsigen Industrieroboters mit einer Führungsvorrichtung und
- Fig. 2a, b: die Führungsvorrichtung gemäß Fig. 1 in zwei Detaildarstellungen aus unterschiedlichen Perspektiven.

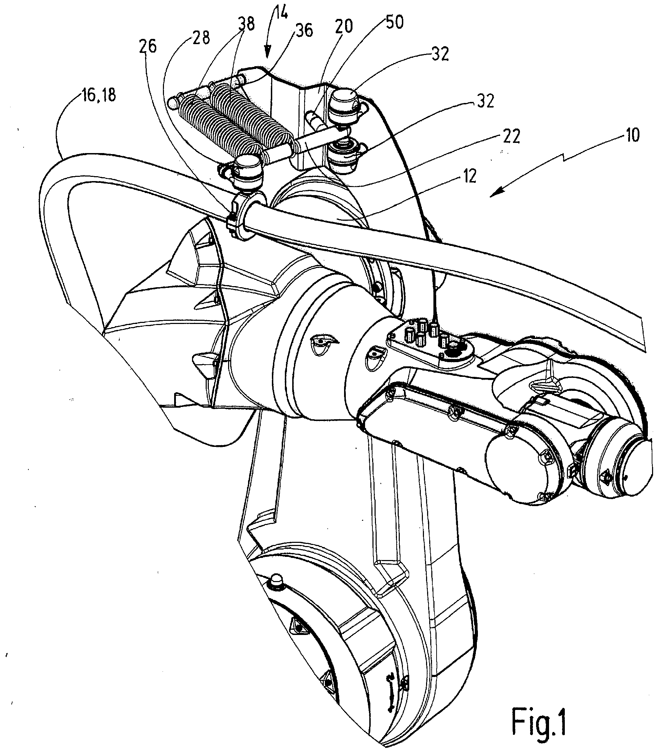

In Fig. 1 ist ein sechsachsiger Industrieroboter 10 teilweise dargestellt, an dessen dritter Roboterachse 12 eine Vorrichtung 14 zur Führung von in einem Leitungspaket 16 zusammengefassten Leitungen montiert ist. Die Leitungen des Leitungspakets 16 werden von einem Schutzschlauch 18 umschlossen.

Die Führungsvorrichtung 14 weist ein Montageelement in Form eines Montageblechs 20 auf, an dem ein Schwenkarm 22 um eine Schwenkachse 24 verschwenkbar angeordnet ist. Da das Montageblech 20 an der dritten Roboterachse 12 fixiert ist, ist die Schwenkachse 24 roboterachsenfest angeordnet. An einem der Schwenkachse 24 abgewandten freien Ende des Schwenkarms 22 ist ein Halter 26 angeordnet, der das Leitungspaket 16 rings umgreift und festhält. Zur Befestigung des Halters 26 am Schwenkarm 22 ist an letzterem ein erstes Befestigungselement 28 montiert, an dem der Halter 26 um eine Drehachse 30 drehbar befestigt ist. Die Schwenkachse 24 ist die Mittellängsachse eines zwischen zwei zweiten Befestigungselementen 32 angeordneten, rohrförmigen Schwenkelements 34, dessen Enden jeweils in einem der beiden zweiten Befestigungselemente 32 um die Schwenkachse 24 drehbar aufgenommen ist, und an dem der Schwenkarm 22 fixiert ist. Die zweiten Befestigungselemente 32 sind wiederum am Montageblech 20 fixiert. Sie sind baugleich ausgeführt und ebenso baugleich mit dem ersten Befestigungselement 28.

Im Abstand zum Schwenkarm 22 ist am Montageblech 20 ein stangenförmiges Gegenlager 36 montiert. Zwischen der Schwenkachse 24 und dem Gegenlager 36 erstrecken sich zwei baugleiche, jeweils als zylindrische Schraubenfeder und als Zugfeder ausgebildete Rückstellfedern 28, welches jeweils mit ihrem ersten Ende 40 am Schwenkarm 22 und mit ihrem zweiten Ende 42 am Gegenlager 36 befestigt sind. Wird der Schwenkarm 22 aus der in der Zeichnung dargestellten Ruheposition in einer ersten Schwenkrichtung 44 um die Schwenkachse 24 verschwenkt, so werden die Rückstellfedern 38 in einer Längsrichtung 46 gedehnt und bringen eine Rückstellkraft auf. Ein Verschwenken des Schwenkarms 22 in einer der ersten Schwenkrichtung 44 entgegengesetzten zweiten Schwenkrichtung 48 aus der Ruheposition heraus wird durch einen am Montageblech 20 angeordneten Anschlag 50 verhindert, an dem der Schwenkarm 22 in der Ruheposition anliegt.

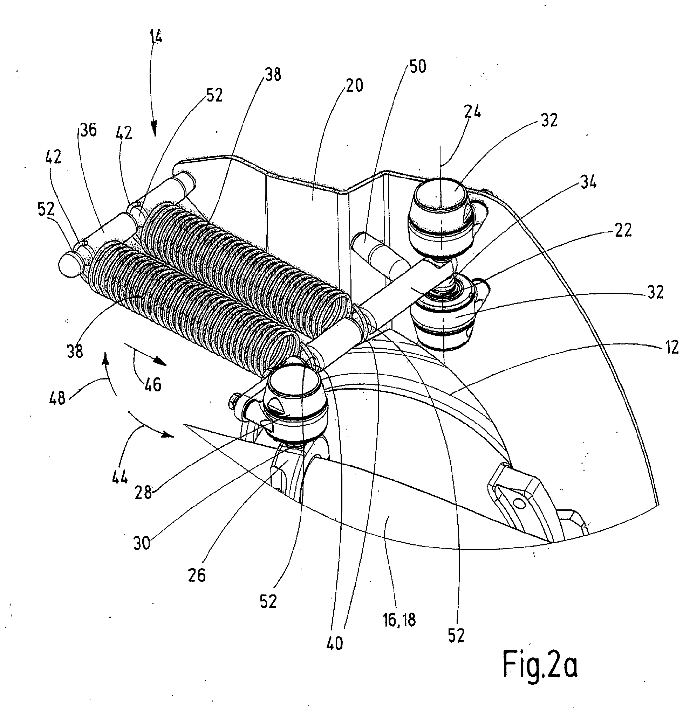

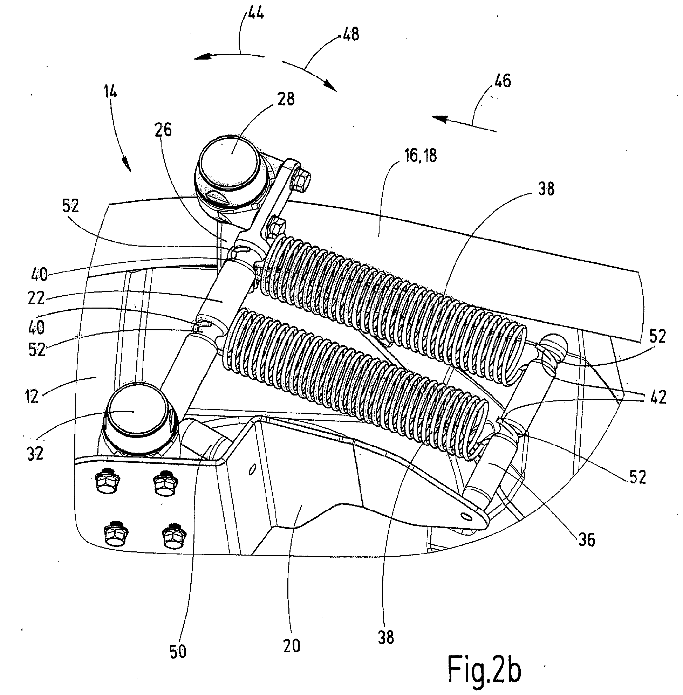

Die Rückstellfedern 38 sind, wie in Fig. 2a, b im Detail gezeigt, so ausgebildet, und angeordnet, dass ihre Windungen im Abstand zueinander angeordnet sind. Dabei beträgt der Abstand zwischen zwei aufeinander folgenden Windungen in der Längsrichtung 46 betrachtet mindestens 3 mm. Sowohl der Schwenkarm 22 als auch das Gegenlager 36 sind jeweils mit zwei rings umlaufenden Kerben 52 versehen, in die jeweils ein hakenförmig gebogener Drahtabschnitt am ersten bzw. zweiten Ende 40, 42 der betreffenden Rückstellfeder 38 eingehakt ist.

Zusammenfassend ist folgendes festzuhalten: Die Erfindung betrifft eine Vorrichtung 14 zur Führung von Leitungen 16 an einem Industrieroboter 10 mit einem Schwenkarm 22 zur Montage an einer Roboterachse 12 in einer um eine roboterachsenfeste Schwenkachse 24 verschwenkbaren Anordnung, mit einem am Schwenkarm 22 montierten Halter 26 für die Leitungen 16 und mit mindestens einer Rückstellfeder 38, gegen deren Rückstellkraft der Schwenkarm 22 in einer ersten Schwenkrichtung 44 aus einer Ruheposition verschwenkbar ist. Erfindungsgemäß ist vorgesehen, dass die mindestens eine Rückstellfeder 38 eine als Schraubenfeder ausgebildete, gegen die Rückstellkraft in einer Längsrichtung 46 dehnbare Zugfeder ist, deren Windungen in der Ruheposition des Schwenkarms 22 in der Längsrichtung 46 im Abstand zueinander angeordnet sind.

## Patentansprüche

1. Vorrichtung zur Führung von Leitungen (16) an einem Industrieroboter (10) mit einem Schwenkarm (22) zur Montage an einer Roboterachse (12) in einer um eine roboterachsenfeste Schwenkachse (24) verschwenkbaren Anordnung, mit einem am Schwenkarm (22) montierten Halter (26) für die Leitungen (16) und mit mindestens einer als Schraubenfeder ausgebildeten Rückstellfeder (38), deren Windungen in der Ruheposition des Schwenkarms (22) in der Längsrichtung (46) im Abstand zueinander angeordnet sind und gegen deren Rückstellkraft der Schwenkarm (22) in einer ersten Schwenkrichtung (44) aus einer Ruheposition verschwenkbar ist, **dadurch gekennzeichnet, dass** die mindestens eine Rückstellfeder (38) eine gegen die Rückstellkraft in einer Längsrichtung (46) dehnbare Zugfeder ist und dass der Schwenkarm (22) in der Ruheposition an einem Anschlag (50) anliegt, der ein Verschwenken des Schwenkarms (22) in einer der ersten Schwenkrichtung (44) entgegengesetzten zweiten Schwenkrichtung (48) verhindert.

2. Vorrichtung nach Anspruch 1, **dadurch gekennzeichnet, dass** zwei oder mehr parallel zueinander angeordnete Rückstellfedern (38) vorgesehen sind, gegen deren Rückstellkraft der Schwenkarm (22) in der ersten Schwenkrichtung (44) aus der Ruheposition verschwenkbar ist, wobei die Rückstellfedern (38) jeweils als Schraubenfedern ausgebildete, gegen die Rückstellkraft in der Längsrichtung (46) dehnbare Zugfedern sind, deren Windungen in der Ruheposition des Schwenkarms (22) in der Längsrichtung (46) im Abstand zueinander angeordnet sind.

3. Vorrichtung nach Anspruch 2, **dadurch gekennzeichnet, dass** alle Rückstellfedern (38) baugleich sind.

4. Vorrichtung nach einem der vorangehenden Ansprüche, **dadurch gekennzeichnet, dass** die Windungen der Rückstellfeder(n) (38) in der Ruheposition des Schwenkarms (22) in einem gegenseitigen Abstand von mindestens 3 mm und vorzugsweise von mindestens 4 mm angeordnet sind.

5. Vorrichtung nach einem der vorangehenden Ansprüche, **dadurch gekennzeichnet, dass** der Halter (26) um eine Drehachse (30) drehbar am Schwenkarm (22) angeordnet ist.

6. Vorrichtung nach Anspruch 5, **dadurch gekennzeichnet, dass** der Halter (26) lösbar und um die Drehachse (30) drehbar an einem ersten Befestigungselement (28) angeordnet ist, welches am Schwenkarm (22) fixiert ist.

7. Vorrichtung nach einem der vorangehenden Ansprüche, **dadurch gekennzeichnet, dass** sich die Schwenkachse (24) zwischen zwei an der Roboterachse (12) fixierten zweiten Befestigungselementen (32) erstreckt.

8. Vorrichtung nach Anspruch 7, **dadurch gekennzeichnet, dass** das erste Befestigungselement (28) und die zweiten Befestigungselemente (32) baugleich sind.

9. Vorrichtung nach einem der vorangehenden Ansprüche, **gekennzeichnet durch** ein Gegenlager (36) zur Montage an der Roboterachse (12), wobei jede Rückstellfeder (38) mit einem ersten Ende (40) am Schwenkarm (22) und mit einem zweiten Ende (42) am Gegenlager (36) befestigt ist.

10. Vorrichtung nach Anspruch 9, **dadurch gekennzeichnet, dass** der Schwenkarm (22) und das Gegenlager (36) jeweils mit Kerben (52) versehen sind, in die jeweils ein Drahtabschnitt der Rückstellfeder (38) oder einer der Rückstellfedern (38) eingreift.

11. Vorrichtung nach einem der vorangehenden Ansprüche, **gekennzeichnet durch** ein Montageelement (20) zur Montage an der Roboterachse (12), an dem der Schwenkarm (22) um die Schwenkachse (24) verschwenkbar angeordnet ist und an dem gegebenenfalls der Anschlag (50) und/oder das Gegenlager (36) angeordnet sind.

12. Industrieroboter mit mehreren Roboterachsen und mit einer an einer der Roboterachsen (12) montierten Vorrichtung (14) nach einem der vorangehenden Ansprüche.

## Claims

1. Device for guiding lines (16) at an industrial robot (10), having a pivot arm (22) for mounting at a robot axis (12) in an arrangement which is pivotable about a pivot axis (24) which is fixed in relation to the robot axis, having a holder (26) for the lines (16) that is mounted on the pivot arm (22), and having at least one restoring spring (38) which is in the form of a helical spring and whose windings are arranged spaced apart from one another in the longitudinal direction (46) in the rest position of the pivot arm (22) and counter to whose restoring force the pivot arm (22) is pivotable from a rest position in a first pivoting direction (44), **characterized in that** the at least one restoring spring (38) is a tension spring which is stretchable in a longitudinal direction (46) counter to the restoring force, and **in that**, in the rest position, the pivot arm (22) bears against a stop (50), which stop prevents pivoting of the pivot arm (22) in a second pivoting direction (48), which is opposite to the first pivoting direction (44).

2. Device according to Claim 1, **characterized in that** provision is made of two or more restoring springs (38) which are arranged parallel to one another and counter to whose restoring force the pivot arm (22) is pivotable from the rest position in the first pivoting direction (44), wherein the restoring springs (38) are each tension springs which are in the form of helical springs and which are stretchable in the longitudinal direction (46) counter to the restoring force and whose windings are arranged spaced apart from one another in the longitudinal direction (46) in the rest position of the pivot arm (22).

3. Device according to Claim 2, **characterized in that** all the restoring springs (38) are structurally identical.

4. Device according to one of the preceding claims, **characterized in that**, in the rest position of the pivot arm (22), the windings of the restoring spring(s) (38) are arranged spaced apart from one another by a distance of at least 3 mm and preferably of at least 4 mm.

5. Device according to one of the preceding claims, **characterized in that** the holder (26) is arranged on the pivot arm (22) so as to be rotatable about an axis of rotation (30).

6. Device according to Claim 5, **characterized in that** the holder (26) is arranged on a first fastening element (28) in a releasable manner and so as to be rotatable about the axis of rotation (30), said first fastening element being fixed to the pivot arm (22) .

7. Device according to one of the preceding claims, **characterized in that** the pivot axis (24) extends between two second fastening elements (32) which are fixed at the robot axis (12).

8. Device according to Claim 7, **characterized in that** the first fastening element (28) and the second fastening elements (32) are structurally identical.

9. Device according to one of the preceding claims, **characterized by** a counter bearing (36) for mounting at the robot axis (12), wherein each restoring spring (38) is fastened at a first end (40) to the pivot arm (22) and at a second end (42) to the counter bearing (36).

10. Device according to Claim 9, **characterized in that** the pivot arm (22) and the counter bearing (36) are each provided with notches (52) into which in each case a wire portion of the restoring spring (38) or of one of the restoring springs (38) engages.

11. Device according to one of the preceding claims, **characterized by** a mounting element (20) for mounting at the robot axis (12), on which mounting element the pivot arm (22) is arranged so as to be pivotable about the pivot axis (24) and on which mounting element the stop (50) and/or the counter bearing (36) are possibly arranged.

12. Industrial robot having multiple robot axes and having a device (14) according to one of the preceding claims which is mounted at one of the robot axes (12).

## Revendications

1. Dispositif de guidage de conduites (16) sur un robot industriel (10) avec un bras pivotant (22) pour le montage sur un axe de robot (12) dans un agencement pivotant autour d'un axe de pivotement (24) fixe par rapport à l'axe du robot, avec un support (26) monté sur le bras pivotant (22) pour les conduites (16) et avec au moins un ressort de rappel (38) configuré sous forme de ressort hélicoïdal, dont les spires sont agencées à distance les unes des autres dans la direction longitudinale (46) dans la position de repos du bras pivotant (22) et contre la force de rappel duquel le bras pivotant (22) peut pivoter dans une première direction de pivotement (44) à partir d'une position de repos, **caractérisé en ce que** l'au moins un ressort de rappel (38) est un ressort de traction extensible contre la force de rappel dans une direction longitudinale (46) et **en ce que** le bras pivotant (22) s'applique dans la position de repos sur une butée (50) qui empêche un pivotement du bras pivotant (22) dans une deuxième direction de pivotement (48) opposée à la première direction de pivotement (44).

2. Dispositif selon la revendication 1, **caractérisé en ce qu'**il est prévu deux ressorts de rappel (38) ou plus agencés parallèlement les uns aux autres, contre la force de rappel desquels le bras pivotant (22) peut pivoter dans la première direction de pivotement (44) à partir de la position de repos, les ressorts de rappel (38) étant respectivement des ressorts de traction configurés sous forme de ressorts hélicoïdaux, extensibles contre la force de rappel dans la direction longitudinale (46), dont les spires sont agencées à distance les unes des autres dans la direction longitudinale (46) dans la position de repos du bras pivotant (22).

3. Dispositif selon la revendication 2, **caractérisé en ce que** tous les ressorts de rappel (38) sont de construction identique.

4. Dispositif selon l'une quelconque des revendications précédentes, **caractérisé en ce que** les spires du ou des ressorts de rappel (38) sont agencées à une distance mutuelle d'au moins 3 mm, et de préférence d'au moins 4 mm, dans la position de repos du bras pivotant (22).

5. Dispositif selon l'une quelconque des revendications précédentes, **caractérisé en ce que** le support (26) est agencé sur le bras pivotant (22) de manière rotative autour d'un axe de rotation (30).

6. Dispositif selon la revendication 5, **caractérisé en ce que** le support (26) est agencé de manière amovible et rotative autour de l'axe de rotation (30) sur un premier élément de fixation (28) qui est fixé au bras pivotant (22) .

7. Dispositif selon l'une quelconque des revendications précédentes, **caractérisé en ce que** l'axe de pivotement (24) s'étend entre deux deuxièmes éléments de fixation (32) fixés sur l'axe du robot (12).

8. Dispositif selon la revendication 7, **caractérisé en ce que** le premier élément de fixation (28) et les deuxièmes éléments de fixation (32) sont de construction identique.

9. Dispositif selon l'une quelconque des revendications précédentes, **caractérisé par** un contre-appui (36) pour le montage sur l'axe du robot (12), chaque ressort de rappel (38) étant fixé par une première extrémité (40) au bras pivotant (22) et par une deuxième extrémité (42) au contre-appui (36).

10. Dispositif selon la revendication 9, **caractérisé en ce que** le bras pivotant (22) et le contre-appui (36) sont chacun pourvus d'encoches (52) dans lesquelles s'engage respectivement une section de fil du ressort de rappel (38) ou de l'un des ressorts de rappel (38).

11. Dispositif selon l'une quelconque des revendications précédentes, **caractérisé par** un élément de montage (20) pour le montage sur l'axe du robot (12), sur lequel le bras pivotant (22) est agencé de manière pivotante autour de l'axe de pivotement (24) et sur lequel sont éventuellement agencés la butée (50) et/ou le contre-appui (36).

12. Robot industriel avec plusieurs axes de robot et avec un dispositif (14) selon l'une quelconque des revendications précédentes monté sur l'un des axes de robot (12).
